# EUROPEAN PATENT APPLICATION

(11) **EP 3 666 073 A1**
(43) Date of publication of application: **17.06.2020**
(21) Application number: 18211664.0
(22) Date of filing: 11.12.2018
(51) Int. Cl.: A01N 43/653, A01N 37/46, A01N 37/50, A01N 43/40, A01N 43/56, A01N 43/713, A01N 43/80, A01N 43/84, A01N 47/20, A01N 47/24, A01N 51/00, A01N 63/00, A01P 3/00

(54) **METHOD TO CONTROL A PHYTHOPATOGENIC FUNGI SELECTED FROM RHIZOCTONIA SOLANI AND PERONOSCLEROSPORA SORGHI IN CORN BY COMPOSITIONS COMPRISING MEFENTRIFLUCONAZOLE**

(71) Applicant: BASF Agro B.V., 6835 EA Arnhem (NL)
(72) Inventor: COQUILLER, Mikael, 1685 Midrand (ZA); GEWEHR, Markus, 67117 Limburgerhof (DE)
(74) Representative: BASF IP Association

(57) **Abstract**

The present invention relates to a method for controlling a phythopatogenic fungi selected from *Rhizoctonia solani* and *Peronosclerospora sorghi* in corn, comprising treating the plants, their seed or the soil with a fungicidally effective amount of the composition comprising mefentrifluconazole (I) and at leas one further active compound (II) selected from *Bacillus amyloliquefaciens ssp. plantarum* MBI 600, boscalid, chlorantraniliprole, clothianidin, cyantraniliprole, dimoxystrobin, fenpropimorph, fluxapyroxad, imidacloprid, ipconazole, kresoxym-methyl, mefenoxam, metalaxyl, metyltetraprole, oxathiapiprolin, penflufen, penthiopyrad, picabutazox, pyraclostrobin, sedaxan, tetraniliprole, thiamethoxam, 4-[1-[2-[3-(difluoromethyl)-5-methyl-pyrazol-1-yl]acetyl]-4-piperidyl]-N-tetralin-1-yl-pyridine-2-carboxamide, 4-[1-[2-[3,5-bis(difluoromethyl)pyrazol-1-yl]acetyl]-4-piperidyl]-N-tetralin-1-yl-pyridine-2-carboxamide, 4-[1-[2-[3-(difluoromethyl)-5-(trifluoromethyl)pyrazol-1-yl]acetyl]-4-piperidyl]-N-tetralin-1-yl-pyridine-2-carboxamide, 4-[1-[2-[5-cyclopropyl-3-(difluoromethyl)pyrazol-1-yl]acetyl]-4-piperidyl]-N-tetralin-1-yl-pyridine-2-carboxamide, 4-[1-[2-[5-methyl-3-(trifluoromethyl)pyrazol-1-yl]acetyl]-4-piperidyl]-N-tetralin-1-yl-pyridine-2-carboxamide, 4-[1-[2-[5-(difluoromethyl)-3-(trifluoromethyl)pyrazol-1-yl]acetyl]-4-piperidyl]-N-tetralin-1-yl-pyridine-2-carboxamide, 4-[1-[2-[3,5-bis(trifluoromethyl)pyrazol-1-yl]acetyl]-4-piperidyl]-N-tetralin-1-yl-pyridine-2-carboxamide and 4-[1-[2-[5-cyclopropyl-3-(trifluoromethyl)pyrazol-1-yl]acetyl]-4-piperidyl]-N-tetralin-1-yl-pyridine-2-carboxamide.

## Description

The present invention relates to a method for controlling a phythopatogenic fungi selected from *Rhizoctonia solani* and *Peronosclerospora sorghi* in corn comprising treating the plants, their seed or the soil with a fungicidally effective amount of a composition comprising
I) mefentrifluconazole or the agriculturally acceptable salts thereof as compound (I)
II) at least one compound (II) selected from the group comprising:
   *Bacillus amyloliquefaciens ssp. plantarum* MBI 600, boscalid, chlorantraniliprole, clothianidin, cyantraniliprole, dimoxystrobin, fenpropimorph, fluxapyroxad, imidacloprid, ipconazole, kresoxym-methyl, mefenoxam, metalaxyl, metyltetraprole, oxathiapiprolin, penflufen, penthiopyrad, picabutazox, pyraclostrobin, sedaxan, tetraniliprole, thiamethoxam, 4-[1-[2-[3-(difluoromethyl)-5-methyl-pyrazol-1-yl]acetyl]-4-piperidyl]-N-tetralin-1-yl-pyridine-2-carboxamide, 4-[1-[2-[3,5-bis(difluoromethyl)pyrazol-1-yl]acetyl]-4-piperidyl]-N-tetralin-1-yl-pyridine-2-carboxamide, 4-[1-[2-[3-(difluoromethyl)-5-(trifluoromethyl)pyrazol-1-yl]acetyl]-4-piperidyl]-N-tetralin-1-yl-pyridine-2-carboxamide, 4-[1-[2-[5-cyclopropyl-3-(difluoromethyl)pyrazol-1-yl]acetyl]-4-piperidyl]-N-tetralin-1-yl-pyridine-2-carboxamide, 4-[1-[2-[5-methyl-3-(trifluoromethyl)pyrazol-1-yl]acetyl]-4-piperidyl]-N-tetralin-1-yl-pyridine-2-carboxamide, 4-[1-[2-[5-(difluoromethyl)-3-(trifluoromethyl)pyrazol-1-yl]acetyl]-4-piperidyl]-N-tetralin-1-yl-pyridine-2-carboxamide, 4-[1-[2-[3,5-bis(trifluoromethyl)pyrazol-1-yl]acetyl]-4-piperidyl]-N-tetralin-1-yl-pyridine-2-carboxamide and 4-[1-[2-[5-cyclopropyl-3-(trifluoromethyl)pyrazol-1-yl]acetyl]-4-piperidyl]-N-tetralin-1-yl-pyridine-2-carboxamide
   and the agriculturally acceptable salts thereof.

Mefentrifluconazole (I) its preparation and use in crop protection are described in WO 2013/007767, which also disclose certain compositions with other active compounds. Owing to the basic character of its nitrogen atoms, mefentrifluconazole is capable of forming salts or adducts with inorganic or organic acids or with metal ions, in particular salts with inorganic acids. Mixures of mefentrifluconazole are described in WO 2014/095994.

Mefentrifluconazole (I) comprises chiral centers and is generally obtained in the form of racemates. The R- and S-enantiomers of mefentrifluconazole (I) can be separated and isolated in pure form with methods known by the skilled person, e.g. by using chiral HPLC.

Therefore, in the method according to the present invention, mefentrifluconazole (I) can be used in form of
- a racemic mixture of the of the (R)-enantiomer and the (S)-enantiomer;
- a mixture with any other proportions of the (R)-enantiomer and the (S)-enantiomer;
- pure (R)-enantiomer or
- pure (S)-enantiomer.

Compounds (II-1) to (II-22) as well as their pesticidal action and methods for producing them are generally known (cf.: http://www.alanwood.net/pesticides/); these substances are commercially available. Compounds (II-23) to (II-30) are known from WO 2015/065922.

Agriculturally acceptable salts encompass especially the salts of those cations or the acid addition salts of those acids whose cations and anions, respectively, have no adverse effect on the fungicidal action of said compounds. Suitable cations are thus in particular the ions of the alkali metals, preferably sodium and potassium, of the alkaline earth metals, preferably calcium, magnesium and barium, of the transition metals, preferably manganese, copper, zinc and iron, and also the ammonium ion which, if desired, may carry one to four C₁-C₄-alkyl substituents and/or one phenyl or benzyl substituent, preferably diisopropylammonium, tetramethylammonium, tetrabutylammonium, trimethylbenzylammonium, furthermore phosphonium ions, sulfonium ions, preferably tri(C₁-C₄-alkyl)sulfonium, and sulfoxonium ions, preferably tri(C₁-C₄-alkyl)sulfoxonium. Anions of useful acid addition salts are primarily chloride, bromide, fluoride, hydrogensulfate, sulfate, dihydrogenphosphate, hydrogenphosphate, phosphate, nitrate, bicarbonate, carbonate, hexafluorosilicate, hexafluorophosphate, benzoate, and the anions of C₁-C₄-alkanoic acids, preferably formate, acetate, propionate and butyrate. They can be formed by reacting such inventive compound with an acid of the corresponding anion, preferably of hydrochloric acid, hydrobromic acid, sulfuric acid, phosphoric acid or nitric acid.

Corn is one of the most important commercial crops around the world. *Rhizoctonia solani* and *Peronosclerospora sorghicause* corn diseases that are difficult to control. There is an urgent need for methods to control said pathogens.

Surprisingly, we have found that the application of compositions comprising mefentrifluconazole ans at least one compound (II) as defined herein shows an unexpected fungicidal action towards *Rhizoctonia solani* and *Peronosclerospora sorghi.*

Thus, the present invention relates to a method for controlling a phythopatogenic fungi selected from *Rhizoctonia solani* and *Peronosclerospora sorghi* on corn (maize), comprising treating the plants, their seed or the soil with a fungicidally effective amount of a composition comprising
I) mefentrifluconazole or the agriculturally acceptable salts thereof as compound (I)
II) at least one compound (II) selected from the group comprising:
   II-1) *Bacillus amyloliquefaciens ssp. plantarum* MBI 600,
   II-2) boscalid,
   II-3) chlorantraniliprole,
   II-4) clothianidin,
   II-5) cyantraniliprole,
   II-6) dimoxystrobin,
   II-7) fenpropimorph,
   II-8) fluxapyroxad,
   II-9) imidacloprid,
   II-10) ipconazole,
   II-11) kresoxym-methyl,
   II-12) mefenoxam,
   II-13) metalaxyl,
   II-14) metyltetraprole,
   II-15) oxathiapiprolin,
   II-16) penflufen,
   II-17) penthiopyrad,
   II-18) picabutazox,
   II-19) pyraclostrobin,
   II-20) sedaxan,
   II-21) tetraniliprole,
   II-22) thiamethoxam,
   II-23) 4-[1-[2-[3-(difluoromethyl)-5-methyl-pyrazol-1-yl]acetyl]-4-piperidyl]-N-tetralin-1-yl-pyridine-2-carboxamide,
   II-24) 4-[1-[2-[3,5-bis(difluoromethyl)pyrazol-1-yl]acetyl]-4-piperidyl]-N-tetralin-1-yl-pyridine-2-carboxamide,
   II-25) 4-[1-[2-[3-(difluoromethyl)-5-(trifluoromethyl)pyrazol-1-yl]acetyl]-4-piperidyl]-N-tetralin-1-yl-pyridine-2-carboxamide,
   II-26) 4-[1-[2-[5-cyclopropyl-3-(difluoromethyl)pyrazol-1-yl]acetyl]-4-piperidyl]-N-tetralin-1-yl-pyridine-2-carboxamide,
   II-27) 4-[1-[2-[5-methyl-3-(trifluoromethyl)pyrazol-1-yl]acetyl]-4-piperidyl]-N-tetralin-1-yl-pyridine-2-carboxamide,
   II-28) 4-[1-[2-[5-(difluoromethyl)-3-(trifluoromethyl)pyrazol-1-yl]acetyl]-4-piperidyl]-N-tetralin-1-yl-pyridine-2-carboxamide,
   II-29) 4-[1-[2-[3,5-bis(trifluoromethyl)pyrazol-1-yl]acetyl]-4-piperidyl]-N-tetralin-1-yl-pyridine-2-carboxamide and
   II-30) 4-[1-[2-[5-cyclopropyl-3-(trifluoromethyl)pyrazol-1-yl]acetyl]-4-piperidyl]-N-tetralin-1-yl-pyridine-2-carboxamide
   and the agriculturally acceptable salts thereof.

Moreover, the invention relates to a use of compositions comprising mefentrifluconazole (I) and at least one compound (II) as described herein for controlling a phythopatogenic fungi selected from *Rhizoctonia solani* and *Peronosclerospora sorghi* on corn (maize).

According one specific embodiment, the present invention relates to a method for controlling *Rhizoctonia solani.*

According to another specific embodiment, the present invention relates to a method for controlling *Peronosclerospora sorghi.*

The compositions to be used in the method of the present invention comprise at least one compound (II).

According to one specific embodiment, the composition comprises one compound (II).

According to the another specific embodiment, the composition comprises two compounds (II) different from each other.

In this embodiment, the first compound (II) is preferably selected from chlorantraniliprole, clothianidin, metalaxyl, penflufen, picabutazox and tetraniliprole and the second compound (II) is preferably selected from *Bacillus amyloliquefaciens ssp. plantarum* MBI 600, imidacloprid, cyantraniliprole, ipconazole, mefenoxam and sedaxan.

According to the another specific embodiment, the composition comprises three compounds (II) different from each other.

In this embodiment, the first compound (II) is preferably selected from chlorantraniliprole, clothianidin, metalaxyl, penflufen, picabutazox and tetraniliprole; the second compound (II) is preferably selected from *Bacillus amyloliquefaciens ssp. plantarum* MBI 600, imidacloprid, cyantraniliprole, ipconazole, mefenoxam and sedaxan; and the third compound (II) is preferably selected from oxathiapiprolin, penthiopyrad, thiamethoxam, 4-[1-[2-[3-(difluoromethyl)-5-methyl-pyrazol-1-yl]acetyl]-4-piperidyl]-N-tetralin-1-yl-pyridine-2-carboxamide, 4-[1-[2-[3,5-bis(difluoromethyl)pyrazol-1-yl]acetyl]-4-piperidyl]-N-tetralin-1-yl-pyridine-2-carboxamide, 4-[1-[2-[3-(difluoromethyl)-5-(trifluoromethyl)pyrazol-1-yl]acetyl]-4-piperidyl]-N-tetralin-1-yl-pyridine-2-carboxamide, 4-[1-[2-[5-cyclopropyl-3-(difluoromethyl)pyrazol-1-yl]acetyl]-4-piperidyl]-N-tetralin-1-yl-pyridine-2-carboxamide, 4-[1-[2-[5-methyl-3-(trifluoromethyl)pyrazol-1-yl]acetyl]-4-piperidyl]-N-tetralin-1-yl-pyridine-2-carboxamide, 4-[1-[2-[5-(difluoromethyl)-3-(trifluoromethyl)pyrazol-1-yl]acetyl]-4-piperidyl]-N-tetralin-1-yl-pyridine-2-carboxamide, 4-[1-[2-[3,5-bis(trifluoromethyl)pyrazol-1-yl]acetyl]-4-piperidyl]-N-tetralin-1-yl-pyridine-2-carboxamide and 4-[1-[2-[5-cyclopropyl-3-(trifluoromethyl)pyrazol-1-yl]acetyl]-4-piperidyl]-N-tetralin-1-yl-pyridine-2-carboxamide.

The specific compositions to be used in a method of the present invention are disclosed in the Table 1. Each line corresponds to a specific embodiment of the present invention.

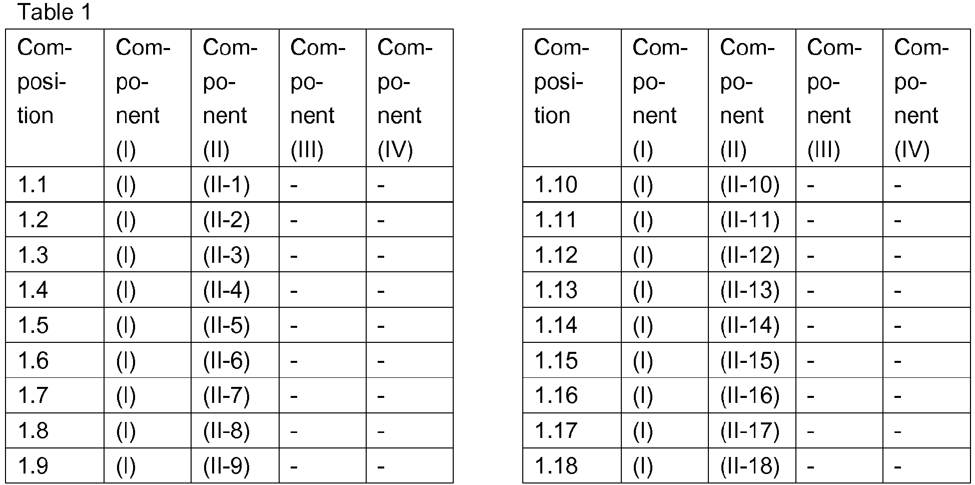

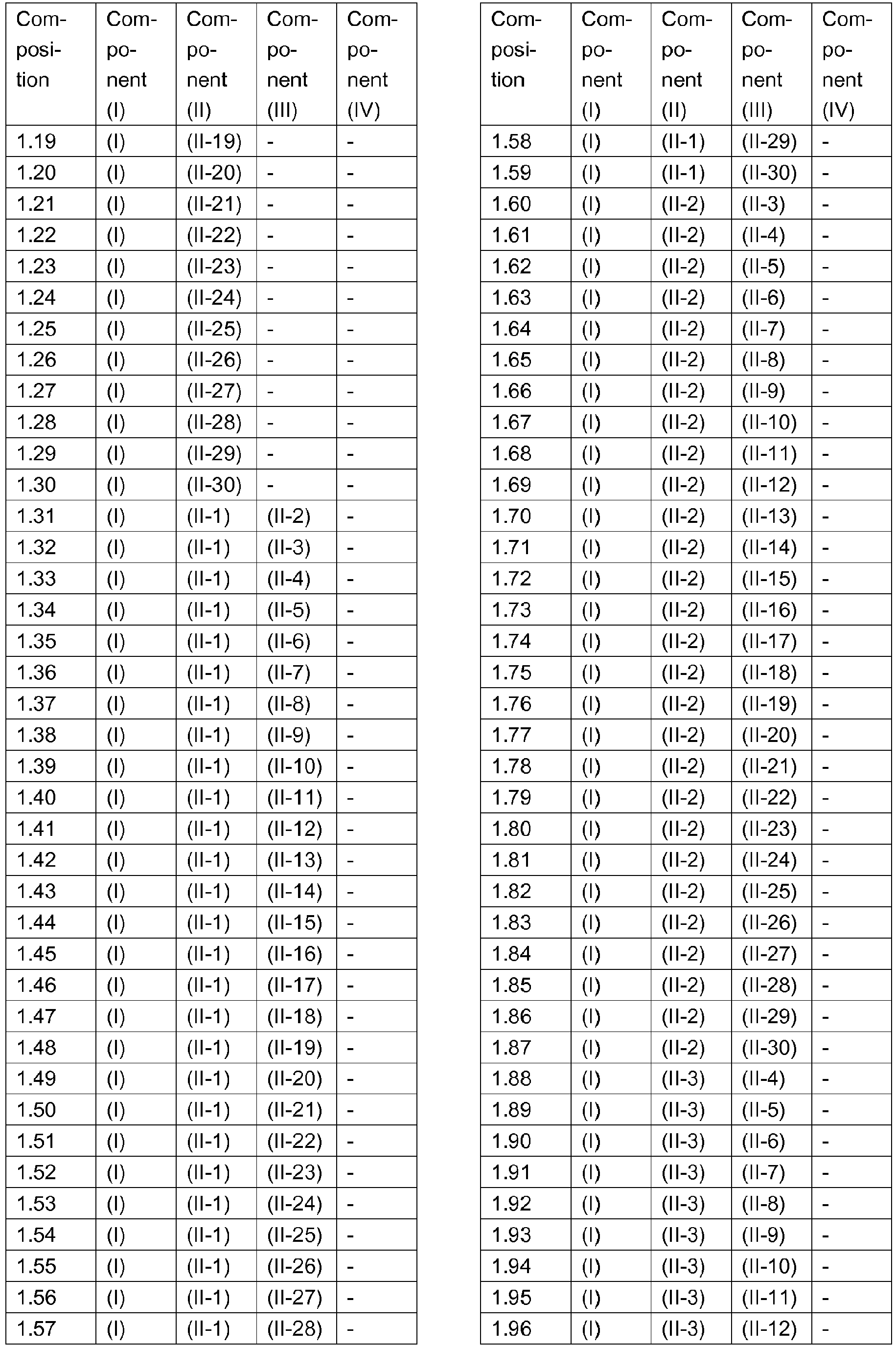

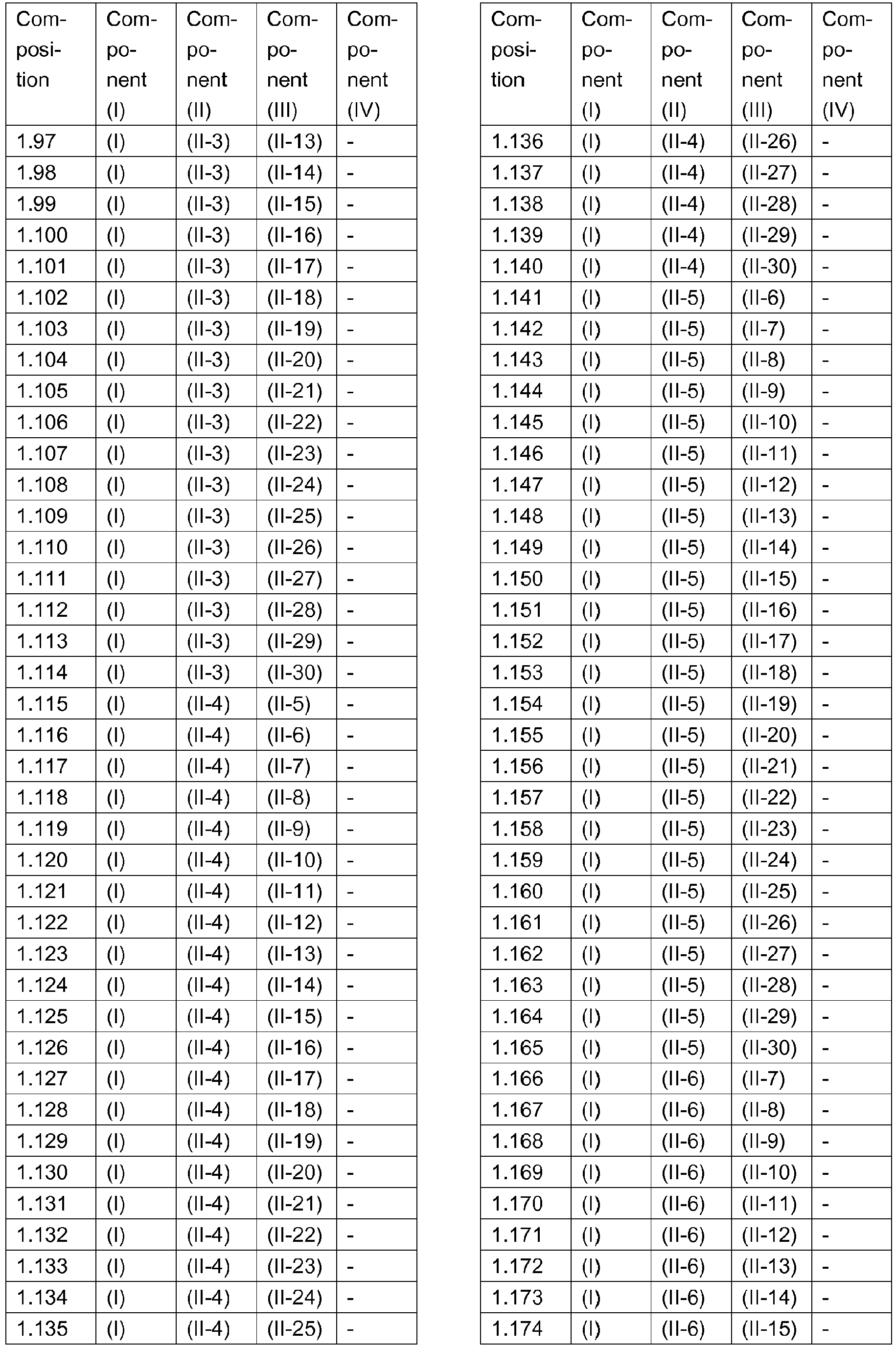

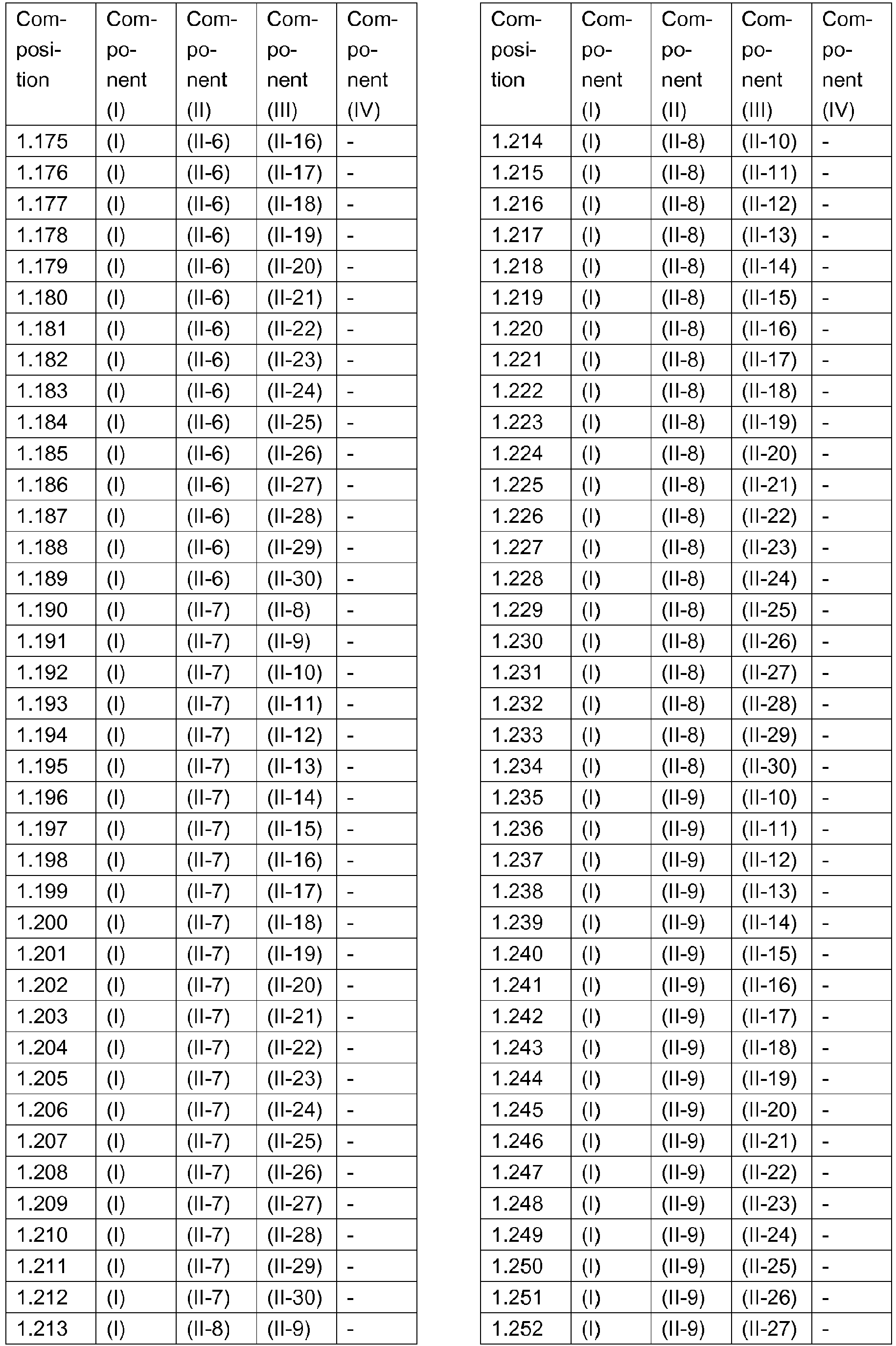

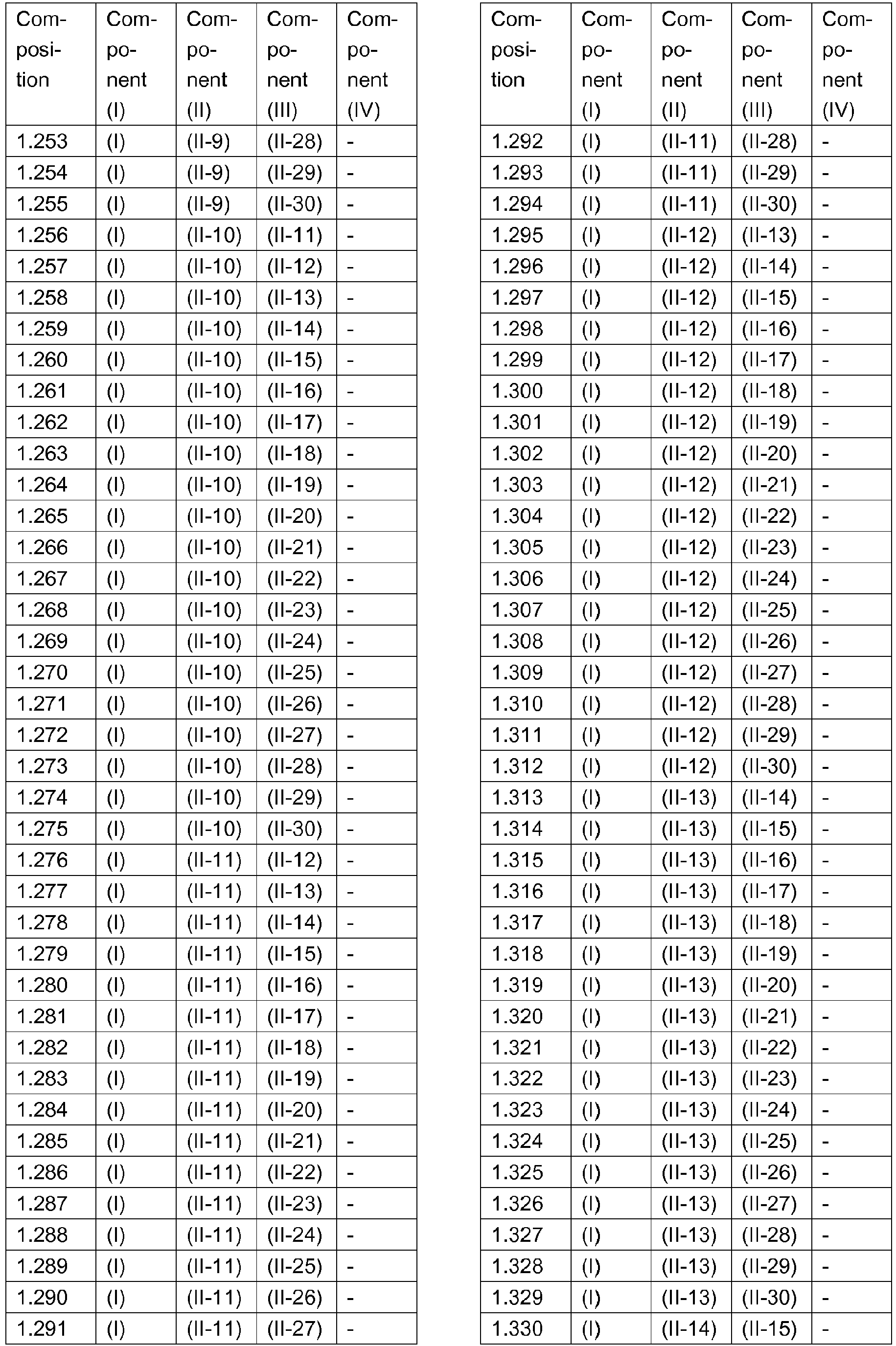

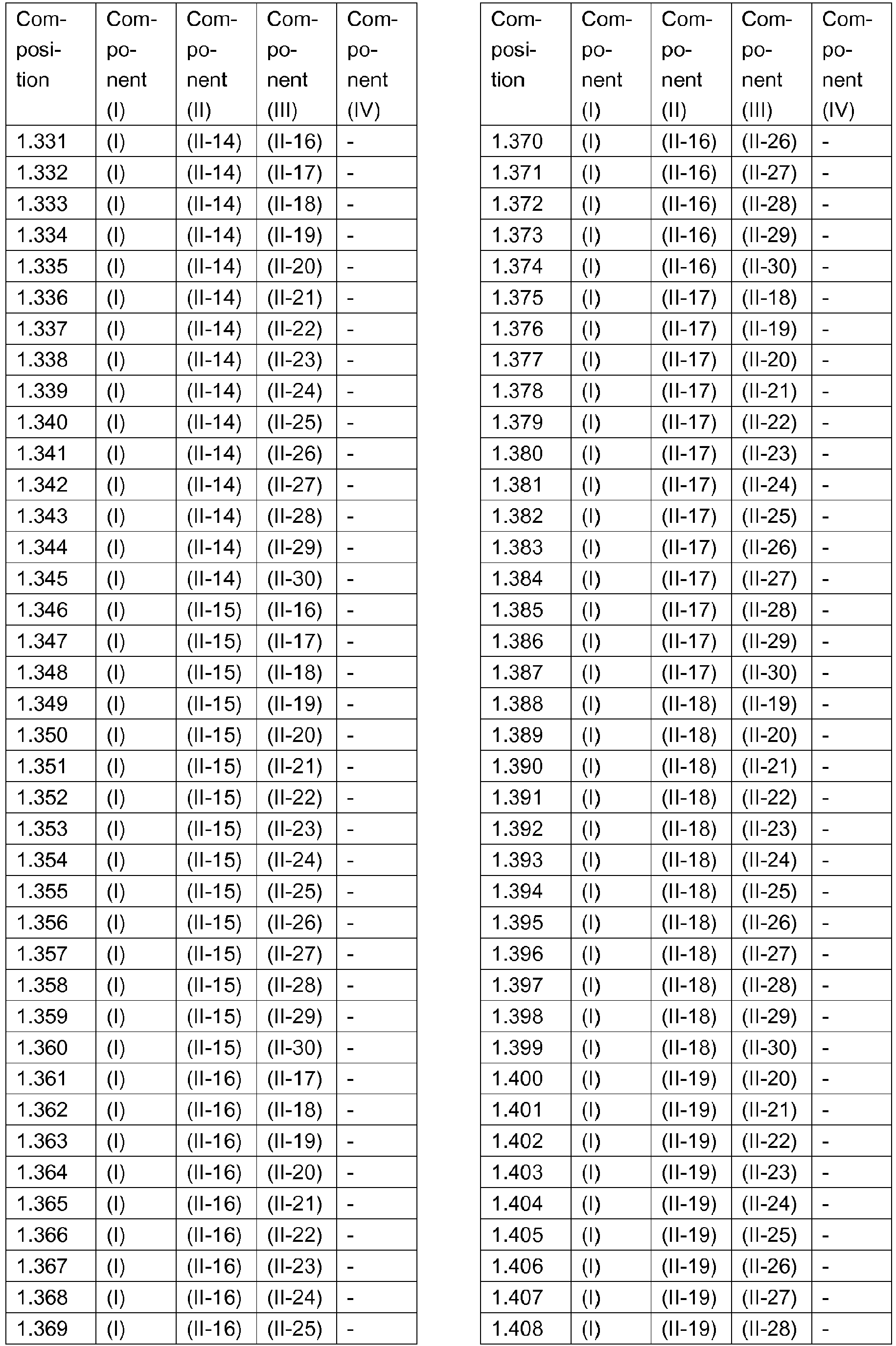

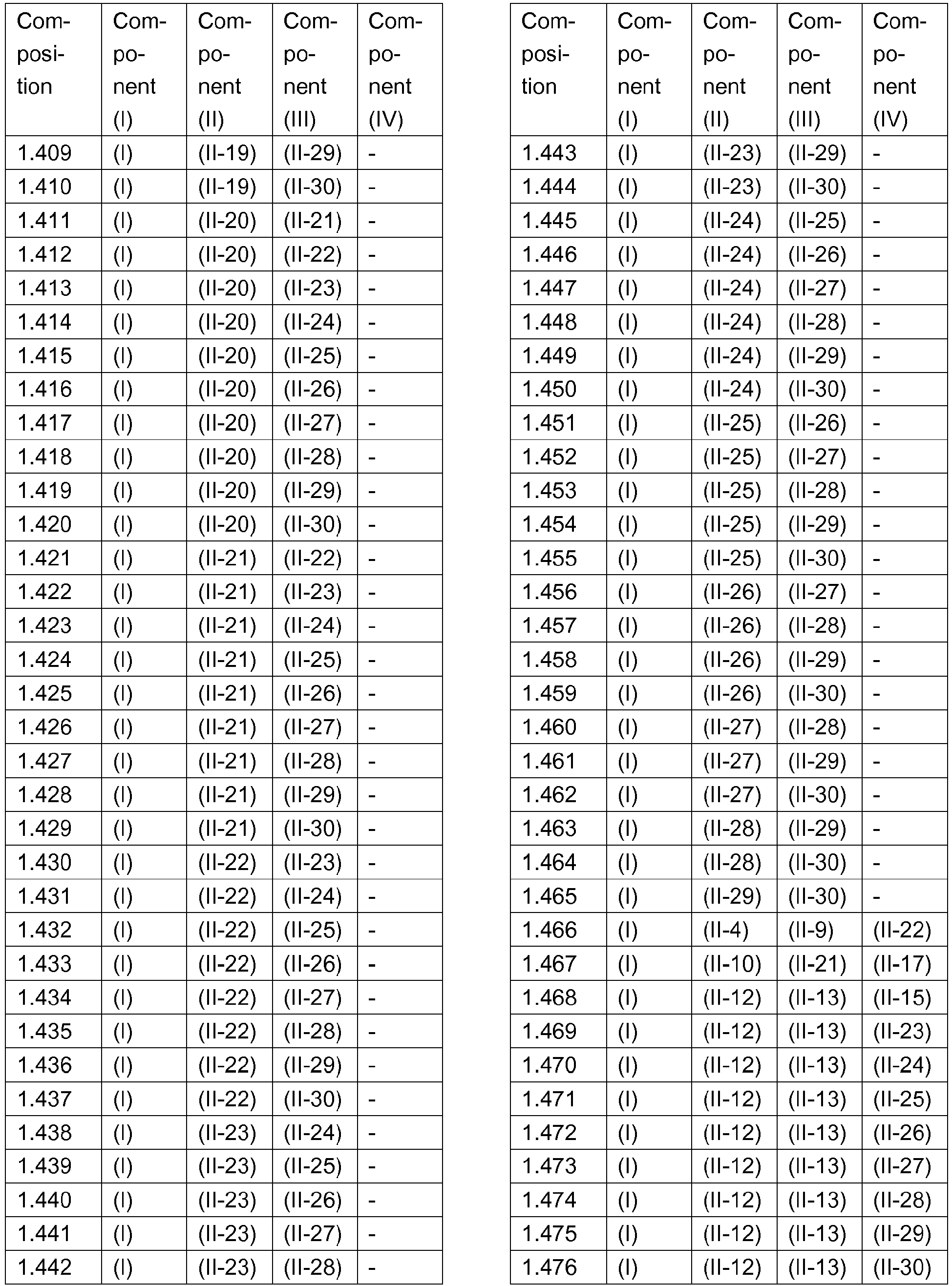

The weight ratio of compound (I) and compound (II) in binary mixtures is usually from 500:1 to 1:500, preferably from 100:1 to 1:100, more preferably from 50:1 to 1:50, even more preferably from 20:1 to 1:20, most preferably from 10:1 to 1:10. The ratios can also be from 1:5 to 5:1, or 1:1.

The ratio by weight of compound (I) and first compound (II) in ternary mixtures is from 500:1 to 1:500, preferably from 100:1 to 1:100 more preferably from 50:1 to 1:50, most preferably from 20:1 to 1:20, including also ratios from 10:1 to 1:10, 1:5 to 5:1, or 1:1. The ratio by weight of compound (I) and second compound (II) in ternary mixtures is from 500:1 to 1:500, preferably from 100:1 to 1:100 more preferably from 50:1 to 1:50, most preferably from 20:1 to 1:20, including also ratios from 10:1 to 1:10, 1:5 to 5:1, or 1:1.

The ratio by weight of compound (I) and first compound (II) in quaternary mixtures is from 500:1 to 1:500, preferably from 100:1 to 1:100 more preferably from 50:1 to 1:50, most preferably from 20:1 to 1:20, including also ratios from 10:1 to 1:10, 1:5 to 5:1, or 1:1. The ratio by weight of compound (I) and second compound (II) in quaternary mixtures is from 500:1 to 1:500, preferably from 100:1 to 1:100 more preferably from 50:1 to 1:50, most preferably from 20:1 to 1:20, including also ratios from 10:1 to 1:10, 1:5 to 5:1, or 1:1. The ratio by weight of compound (I) and third compound (II) in quaternary mixtures is from 500:1 to 1:500, preferably from 100:1 to 1:100 more preferably from 50:1 to 1:50, most preferably from 20:1 to 1:20, including also ratios from 10:1 to 1:10, 1:5 to 5:1, or 1:1.

The compound (I) and compound(s) (II) can be applied simultaneously, that is jointly or separately, or in succession. According to one embodiment, the compound (I) and compound(s) (II) are applied simultaneously. According to another embodiment, compound (I) and compound(s) (II) are applied in succession.

In one embodiment, the method comprises treating the corn plants.

In a further embodiment, the method comprises treating corn seeds.

In a further embodiment, the method comprises treating the soil.

In one embodiment, the present invention relates to a method for controlling *Rhizoctonia solani* on corn, comprising treating the plants, their seed or the soil with a fungicidally effective amount of a composition comprising mefentrifluconazole (I) and at least one compound (II) as described herein. In a specific embodiment, the method comprises treating the corn plants. In a further specific embodiment, the method comprises treating corn seeds.

In another embodiment, the present invention relates to a method for controlling *Peronosclerospora sorghi* on corn, comprising treating the plants, their seed or the soil with a fungicidally effective amount of a composition comprising mefentrifluconazole (I) and at least one compound (II) as described herein. In a specific embodiment, the method comprises treating the corn plants. In a further specific embodiment, the method comprises treating corn seeds.

Treating the plants, their seed or the soil in the method according to present invention may be carried out in spray application, in seed treatment, in drip and drench applications, in-furrow applications, on-seed application and overall soil incorporation, chemigation, i.e. by addition of the active ingredients to the irrigation water, and in hydroponic/mineral systems.

The specific methods of the present invention are disclosed in the Tables A to F.
Table A. Methods to control *Rhizoctonia solani* in corn by treating the plants with a compositions 1.1 to 1.476 of Table 1. (Methods A.1.1 - A.1.476)
Table B. Methods to control *Rhizoctonia solani* in corn by treating the seeds with a compositions 1.1 to 1.476 of Table 1. (Methods B.1.1 - B.1.476)
Table C. Methods to control *Rhizoctonia solani* in corn by treating the soil with a compositions 1.1 to 1.476 of Table 1. (Methods C.1.1 - C.1.476)
Table D. Methods to control *Peronosclerospora sorghi* in corn by treating the plants with a compositions 1.1 to 1.476 of Table 1. (Methods D.1.1 - D.1.476)
Table E. Methods to control *Peronosclerospora sorghi* in corn by treating the seeds with a compositions 1.1 to 1.476 of Table 1. (Methods E.1.1 - E.1.476)
Table F. Methods to control *Peronosclerospora sorghi* in corn by treating the soil with a compositions 1.1 to 1.476 of Table 1. (Methods F.1.1 - F.1.476)

The term "plant propagation material" is to be understood to denote all the generative parts of the plant in particular seeds.

Plants and as well as the propagation material of said plants, which can be treated with fungicidally effective amount of a composition comprising mefentrifluconazole (I) and at least one compound (II) as described herein include all genetically modified plants or transgenic plants, e.g. crops which tolerate the action of herbicides or fungicides or insecticides owing to breeding, including genetic engineering methods, or plants which have modified characteristics in comparison with existing plants, which can be generated for example by traditional breeding methods and/or the generation of mutants, or by recombinant procedures.

For example, mixtures according to the present invention can be applied (as seed treatment, spray treatment, in furrow or by any other means) also to plants which have been modified by breeding, mutagenesis or genetic engineering including but not limiting to agricultural bio-tech products on the market or in development (cf. http://www.bio.org/speeches/pubs/er/agri_products.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transitional modification of protein(s), oligo- or polypeptides e. g. by glycosylation or polymer additions such as prenylated, acetylated or farnesylated moieties or PEG moieties.

For use according to the present invention, a composition comprising mefentrifluconazole (I) and at least one compound (II) as described herein can be converted into the customary formulations, for example solutions, emulsions, suspensions, dusts, powders, pastes and granules. The use form depends on the particular intended purpose; in each case, it should ensure a fine and even distribution of the mixtures according to the present invention. The formulations are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation technology (Wiley VCH Verlag, Weinheim, 2001).

The agrochemical formulations may also comprise auxiliaries which are customary in agrochemical formulations. The auxiliaries used depend on the particular application form and active substance, respectively.

Examples for suitable auxiliaries are solvents, solid carriers, dispersants or emulsifiers (such as further solubilizers, protective colloids, surfactants and adhesion agents), organic and inorganic thickeners, bactericides, anti-freezing agents, anti-foaming agents, if appropriate colorants and tackifiers or binders (e. g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e. g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesi-um sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wetters, tackifiers, dispersants or emulsifiers) are alkali metal, alkaline earth metal and ammonium salts of aromatic sulfonic acids, such as ligninsoulfonic acid (Borresperse® types, Borregard, Norway) phenolsulfonic acid, naphthalenesulfonic acid (Morwet® types, Akzo Nobel, U.S.A.), dibutylnaphthalene-sulfonic acid (Nekal® types, BASF, Germany),and fatty acids, alkylsulfonates, alkyl-arylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formal-dehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol® types, Clariant, Switzerland), polycarboxylates (Sokolan® types, BASF, Germany), polyalkoxylates, polyvinylamines (Lupasol® types, BASF, Germany), polyvinylpyrrolidone and the copolymers therof.

Examples for thickeners (i. e. compounds that impart a modified flowability to formula-tions, i. e. high viscosity under static conditions and low viscosity during agitation) are polysaccharides and organic and inorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA).

Bactericides may be added for preservation and stabilization of the formulation. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie).

Examples for suitable anti-freezing agents are ethylene glycol, propylene glycol, urea and glycerin.

Examples for anti-foaming agents are silicone emulsions (such as e. g. Silikon® SRE, Wacker, Germany or Rhodorsil®, Rhodia, France), long chain alcohols, fatty acids, salts of fatty acids, fluoroorganic compounds and mixtures thereof.

Suitable colorants are pigments of low water solubility and water-soluble dyes. Examples are rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples for tackifiers or binders are polyvinylpyrrolidons, polyvinylacetates, polyvinyl alcohols and cellulose ethers (Tylose®, Shin-Etsu, Japan).
Powders, materials for spreading and dusts can be prepared by mixing or conco-mitantly grinding composition comprising mefentrifluconazole (I) and at least one compound (II) as described herein and, if appropriate, further active substances, with at least one solid carrier.

Granules, e. g. coated granules, impregnated granules and homogeneous granules, can be prepared by binding composition comprising mefentrifluconazole (I) and at least one compound (II) as described herein to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nut-shell meal, cellulose powders and other solid carriers.

Examples of formulation types are suspensions (SC, OD, FS), emulsifiable concentrates (EC), emulsions (EW, EO, ES), pastes, pastilles, wettable powders or dusts (WP, SP, SS, WS, DP, DS) or granules (GR, FG, GG, MG), which can be water-soluble or wettable, as well as gel formulations for the treatment of plant propagation materials such as seeds (GF), herein further below exemplified in detail:
1. Composition types for dilution with water
   i) Water-soluble concentrates (SL, LS)
      10 parts by weight of composition comprising mefentrifluconazole (I) and at least one compound (II) as described herein are dissolved in 90 parts by weight of water or in a water-soluble solvent. As an alternative, wetting agents or other auxiliaries are added. The active substance dissolves upon dilution with water. In this way, a formulation having a content of 10% by weight of active substance is obtained.
   ii) Dispersible concentrates (DC)
      20 parts by weight of composition comprising mefentrifluconazole (I) and at least one compound (II) as described herein are dissolved in 70 parts by weight of cyclohexanone with addition of 10 parts by weight of a dispersant, e. g. poly-vinylpyrrolidone. Dilution with water gives a dispersion. The active substance content is 20% by weight.
   iii) Emulsifiable concentrates (EC)
      15 parts by weight of composition comprising mefentrifluconazole (I) and at least one compound (II) as described herein are dissolved in 75 parts by weight of xylene with addition of calcium dodecylbenzenesulfonate and castor oil ethoxylate (in each case 5 parts by weight). Dilution with water gives an emulsion. The composition has an active substance content of 15% by weight.
   iv) Emulsions (EW, EO, ES)
      25 parts by weight of composition comprising mefentrifluconazole (I) and at least one compound (II) as described herein are dissolved in 35 parts by weight of xylene with addition of calcium dodecylbenzenesulfonate and castor oil ethoxylate (in each case 5 parts by weight). This mixture is introduced into 30 parts by weight of water by means of an emulsifying machine (Ultraturrax) and made into a ho-mogeneous emulsion. Dilution with water gives an emulsion. The composition has an active substance content of 25% by weight.
   v) Suspensions (SC, OD, FS)
      In an agitated ball mill, 20 parts by weight of composition comprising mefentrifluconazole (I) and at least one compound (II) as described herein are comminuted with addition of 10 parts by weight of dispersants and wetting agents and 70 parts by weight of water or an organic solvent to give a fine active substance sus-pension. Dilution with water gives a stable suspension of the active substance. The active substance content in the composition is 20% by weight.
   vi) Water-dispersible granules and water-soluble granules (WG, SG)
      50 parts by weight of composition comprising mefentrifluconazole (I) and at least one compound (II) as described herein are ground finely with addi-tion of 50 parts by weight of dispersants and wetting agents and prepared as water-dispersible or water-soluble granules by means of technical appliances (e. g. extrusion, spray tower, fluidized bed). Dilution with water gives a stable dispersion or solution of the active substance. The composition has an active substance content of 50% by weight.
   vii) Water-dispersible powders and water-soluble powders (WP, SP, SS, WS)
      75 parts by weight of composition comprising mefentrifluconazole (I) and at least one compound (II) as described herein are ground in a rotor-stator mill with addition of 25 parts by weight of dispersants, wetting agents and silica gel. Dilution with water gives a stable dispersion or solution of the active substance. The active substance content of the composition is 75% by weight.
   viii) Gel (GF)
      In an agitated ball mill, 20 parts by weight of composition comprising mefentrifluconazole (I) and at least one compound (II) as described herein are comminuted with addition of 10 parts by weight of dispersants, 1 part by weight of a gelling agent wetters and 70 parts by weight of water or of an organic solvent to give a fine suspension of the active substance. Dilution with water gives a stable suspension of the active substance, whereby a composition with 20% (w/w) of active substance is obtained.
2. Composition types to be applied undiluted
   ix) Dustable powders (DP, DS)
      5 parts by weight of composition comprising mefentrifluconazole (I) and at least one compound (II) as described herein are ground finely and mixed intimately with 95 parts by weight of finely divided kaolin. This gives a dustable compo-sition having an active substance content of 5% by weight.
   x) Granules (GR, FG, GG, MG)
      0.5 parts by weight of composition comprising mefentrifluconazole (I) and at least one compound (II) as described herein is ground finely and associ-ated with 99.5 parts by weight of carriers. Current methods are extrusion, spray-drying or the fluidized bed. This gives granules to be applied undiluted having an active sub-stance content of 0.5% by weight.
   xi) ULV solutions (UL)
      10 parts by weight of composition comprising mefentrifluconazole (I) and at least one compound (II) as described herein are dissolved in 90 parts by weight of an organic solvent, e. g. xylene. This gives a composition to be applied undiluted having an active substance content of 10% by weight.

The agrochemical formulations generally comprise between 0.01 and 95%, preferably between 0.1 and 90%, most preferably between 0.5 and 90%, by weight of active substances.
composition comprising mefentrifluconazole (I) and at least one compound (II) as described herein can be used as such or in the form of their compositions, e. g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the compounds present in composition comprising mefentrifluconazole (I) and at least one compound (II) as described herein.

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active sub-stance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1% by weight of composition comprising mefentrifluconazole (I) and at least one compound (II) as described herein.

Composition comprising mefentrifluconazole (I) and at least one compound (II) as described herein may also be used successfully in the ultra-low-volume process (ULV), it being possible to apply compositions comprising over 95% by weight of active substance, or even to apply the active substance without addi-tives.

Various types of oils, wetters, adjuvants, herbicides, fungicides, other pesticides, or bactericides may be added to the active compounds present in the composition comprising mefentrifluconazole (I) and at least one compound (II) as described herein, if appropriate not until immediately prior to use (tank mix). These agents can be admixed with composition comprising mefentrifluconazole (I) and at least one compound (II) as described herein in a weight ratio of 1:100 to 100:1, preferably 1:10 to 10:1.

Compositions of this invention may also contain fertilizers such as ammonium nitrate, urea, potash, and superphosphate, phytotoxicants and plant growth regulators and safeners. These may be used sequentially or in combination with the above-described compositions, if appropriate also added only immediately prior to use (tank mix). For example, the plant(s) may be sprayed with a composition of this invention either before or after being treated with the fertilizers.

Compositions are applied by treating the fungi or the plants, plant propagation materials (preferably seeds), materials or soil to be protected from fungal attack with a pesticidally effective amount of composition comprising mefentrifluconazole (I) and at least one compound (II) as described herein. The application can be carried out both before and after the infection of the materials, plants or plant propagation materials (preferably seeds) by the pests.
In general, "pesticidally effective amount" means the amount of composition comprising mefentrifluconazole (I) and at least one compound (II) as described herein or of compositions comprising composition comprising mefentrifluconazole (I) and at least one compound (II) as described herein needed to achieve an observable effect on growth, including the effects of necrosis, death, retardation, prevention, and removal, destruction, or otherwise diminishing the occurrence and activity of the target organism. The pesticidally effective amount can vary. A pesticidally effective amount will also vary according to the prevailing conditions such as desired pesticidal effect and duration, weather, target species, locus, mode of application, and the like.

When preparing the compositions comprising composition comprising mefentrifluconazole (I) and at least one compound (II) as described herein, it is preferred to employ the pure active compound, to which optionally further active compounds against pests, such as insecticides, herbicides, fungicides or else herbicidal or growth-regulating active compounds or fertilizers can be added as further active components according to need.

Preferably, composition comprising mefentrifluconazole (I) and at least one compound (II) as described herein is employed by treating the fungi or the plants or soil to be protected from pesticidal attack via foliar application with a pesticidally effective amount of composition comprising mefentrifluconazole (I) and at least one compound (II) as described herein. Also herein, the application can be carried out both before and after the infection of the plants by the pests.

In the method of combating harmful fungi depending on the type of compound and the desired effect, the application rates of composition comprising mefentrifluconazole (I) and at least one compound (II) as described herein are from 0,1 g/ha to 10000 g/ha, preferably 2 g/ha to 2500 g/ha, more preferably from 5 to 1000 g/ha, most preferably from 10 to 750 g/ha, in particular from 20 to 700 g/ha.

In an alternative embodiment of the invention, the composition comprising mefentrifluconazole (I) and at least one compound (II) as described herein are used for the protection of the seed and the seedlings' roots and shoots, preferably the seeds as set forth above.

Compositions, which are especially useful for seed treatment are e.g.:
- A: Soluble concentrates (SL, LS)
- D: Emulsions (EW, EO, ES)
- E: Suspensions (SC, OD, FS)
- F: Water-dispersible granules and water-soluble granules (WG, SG)
- G: Water-dispersible powders and water-soluble powders (WP, SP, WS)
- H: Gel-Formulations (GF)
- I: Dustable powders (DP, DS)

These compositions can be applied to plant propagation materials, particularly seeds, diluted or undiluted. These compositions can be applied to plant propagation materials, particularly seeds, diluted or undiluted. The compositions in question give, after two-to-tenfold dilution, active substance concentrations of from 0.01 to 60% by weight, prefer-ably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the compounds or the compositions thereof, respectively, are applied on to the plant propagation material by a method such that germination is not induced, e. g. by seed dressing, pelleting, coating and dusting.

In the treatment of plant propagation material (preferably seed), the application rates of the inventive mixture are generally for the formulated product (which usually comprises from 10 to 750 g/l of the active(s)) .

The invention also relates to the propagation products of plants, and especially the seed comprising, that is, coated with and/or containing, a mixture as defined above or a composition containing the mixture of two or more active ingredients or a mixture of two or more compositions each providing one of the active ingredients. The plant propagation material (preferably seed) comprises composition comprising mefentrifluconazole (I) and at least one compound (II) as described herein in an amount of from 0.1 g to 10 kg per 100 kg of plant propagation material (preferably seed), preferably 0.1 g to 1 kg per 100 kg of plant propagation mate rial (preferably seed).

The invention is further illustrated, but not limited by the following practical examples:

## Claims

1. A method for controlling a phythopatogenic fungi selected from *Rhizoctonia solani* and *Peronosclerospora sorghi* on corn (maize), comprising treating the plants, their seed or the soil with a fungicidally effective amount of a composition comprising
I) mefentrifluconazole or the agriculturally acceptable salts thereof as compound (I)
II) at least one compound (II) selected from the group comprising:
II-1) *Bacillus amyloliquefaciens ssp. plantarum* MBI 600,
II-2) boscalid,
II-3) chlorantraniliprole,
II-4) clothianidin,
II-5) cyantraniliprole,
II-6) dimoxystrobin,
II-7) fenpropimorph,
II-8) fluxapyroxad,
II-9) imidacloprid,
II-10) ipconazole,
II-11) kresoxym-methyl,
II-12) mefenoxam,
II-13) metalaxyl,
II-14) metyltetraprole,
II-15) oxathiapiprolin,
II-16) penflufen,
II-17) penthiopyrad,
II-18) picabutazox,
II-19) pyraclostrobin,
II-20) sedaxan,
II-21) tetraniliprole,
II-22) thiamethoxam,
II-23) 4-[1-[2-[3-(difluoromethyl)-5-methyl-pyrazol-1-yl]acetyl]-4-piperidyl]-N-tetralin-1-yl-pyridine-2-carboxamide,
II-24) 4-[1-[2-[3,5-bis(difluoromethyl)pyrazol-1-yl]acetyl]-4-piperidyl]-N-tetralin-1-yl-pyridine-2-carboxamide,
II-25) 4-[1-[2-[3-(difluoromethyl)-5-(trifluoromethyl)pyrazol-1-yl]acetyl]-4-piperidyl]-N-tetralin-1-yl-pyridine-2-carboxamide,
II-26) 4-[1-[2-[5-cyclopropyl-3-(difluoromethyl)pyrazol-1-yl]acetyl]-4-piperidyl]-N-tetralin-1-yl-pyridine-2-carboxamide,
II-27) 4-[1-[2-[5-methyl-3-(trifluoromethyl)pyrazol-1-yl]acetyl]-4-piperidyl]-N-tetralin-1-yl-pyridine-2-carboxamide,
II-28) 4-[1-[2-[5-(difluoromethyl)-3-(trifluoromethyl)pyrazol-1-yl]acetyl]-4-piperidyl]-N-tetral in-1-yl-pyridine-2-carboxamide,
II-29) 4-[1-[2-[3,5-bis(trifluoromethyl)pyrazol-1-yl]acetyl]-4-piperidyl]-N-tetralin-1-yl-pyridine-2-carboxamide and
II-30) 4-[1-[2-[5-cyclopropyl-3-(trifluoromethyl)pyrazol-1-yl]acetyl]-4-piperidyl]-N-tetralin-1-yl-pyridine-2-carboxamide
and the agriculturally acceptable salts thereof.

2. A method according to claim 1, wherein the composition is applied to the plants.

3. A method according to claim 1, wherein the composition is applied to the soil.

4. A method according to claim 1, wherein the composition is applied to the seed of plants.

5. A method according to any of claims 1 to 4, wherein the phythopatogenic fungi is *Rhizoctonia solani.*

6. A method according to any of claims 1 to 4, wherein the phythopatogenic fungi is *Peronosclerospora sorghi.*

7. A method according to any of claims 1 to 6, wherein the composition comprises one compound (II).

8. A method according to any of claims 1 to 6, wherein the composition comprises two compounds (II) differing from each other.

9. A method according to any of claims 1 to 6, wherein the composition comprises three compounds (II) differing from each other.

10. A method according to any of claims 1 to 9, wherein the composition is applied in an amount from 5 g/ha to 2500 g/ha.

11. A method according to claim 4, wherein the composition is applied to seeds in an amount from 0.01 g to 10 kg per 100 kg.

12. Use of the compositions as defined in claim 1 to control phythopatogenic fungi selected from *Rhizoctonia solani* and *Peronosclerospora sorghi* in corn.

13. Use according to claim 12, wherein the phythopatogenic fungi is *Rhizoctonia solani.*

14. Use according to claim 12, wherein the phythopatogenic fungi is *Peronosclerospora sorghi.*
